# EUROPEAN PATENT APPLICATION

(11) **EP 4 787 262 A1**
(43) Date of publication of application: **05.08.2026**
(21) Application number: 24897021.2
(22) Date of filing: 29.08.2024
(51) Int. Cl.: G06Q 10/20, G06Q 10/0631, G06Q 50/40

(54) **AIRCRAFT MONITORING SYSTEM AND MAINTENANCE WORK SETTING METHOD**

(30) Priority: 28.11.2023 JP 2023200711
(71) Applicant: Mitsubishi Heavy Industries, Ltd., Chiyoda-ku Tokyo 100-8332 (JP)
(72) Inventor: SHIROTORI, Kento, Tokyo 100-8332 (JP); YAMAZAKI, Shinsuke, Tokyo 100-8332 (JP); TORIMOTO, Kazutaka, Nagoya-shi, Aichi 460-0008 (JP)
(74) Representative: Hoffmann Eitle
(86) International application number: PCT/JP2024/030881
(87) International publication number: WO 2025/115330

(57) **Abstract**

This aircraft monitoring system includes a control unit that monitors a state of an aircraft and sets maintenance work required for the aircraft. The control unit executes: a step of acquiring monitoring information obtained by monitoring the state of the aircraft; and a step of acquiring component information that is information on a state of a component used in the aircraft, and extracting and setting an item of the maintenance work required for the aircraft on the basis of the monitoring information and the component information.

## Description

### Technical Field

The present disclosure relates to an aircraft monitoring system and a maintenance work setting method.

### Background Art

In the related art, a maintenance work support system is known that acquires information related to a state of a device, determines whether the state of the device is normal from the acquired information, and outputs maintenance work associated with the state of the device in a case where the state of the device is not normal (abnormal) (for example, see PTL 1).

### Citation List

### Patent Literature

[PTL 1] Japanese Unexamined Patent Application Publication No. 2019-145052

### Summary of Invention

### Technical Problem

Meanwhile, since an aircraft that is a target of maintenance work has a large number of components, in a case where an item of maintenance work is to be selected based only on monitoring information obtained by monitoring the aircraft, there are many options for the item of maintenance work to be selected, or an unnecessary maintenance process is performed during a predetermined maintenance work. Therefore, in the setting of maintenance work based only on the monitoring information, it is difficult to plan efficient maintenance work for the aircraft.

Therefore, an object of the present disclosure is to provide an aircraft monitoring system and a maintenance work setting method capable of setting appropriate and efficient maintenance work.

### Solution to Problem

An aircraft monitoring system of the present disclosure is an aircraft monitoring system including a control unit that monitors a state of an aircraft and sets maintenance work required for the aircraft, in which the control unit executes a step of acquiring monitoring information obtained by monitoring the state of the aircraft, and a step of acquiring component information that is information on a state of a component used in the aircraft, and extracting and setting an item of the maintenance work required for the aircraft, based on the monitoring information and the component information.

A maintenance work setting method of the present disclosure is a maintenance work setting method executed by an aircraft monitoring system that monitors a state of an aircraft and sets maintenance work required for the aircraft, the method including: by the aircraft monitoring system, a step of acquiring monitoring information obtained by monitoring the state of the aircraft; and a step of acquiring component information that is information on a state of a component used in the aircraft, and extracting and setting an item of the maintenance work required for the aircraft based on the monitoring information and the component information.

### Advantageous Effects of Invention

According to the present disclosure, it is possible to set appropriate and efficient maintenance work.

### Brief Description of Drawings

FIG. 1 is a diagram of a monitoring system according to the present embodiment.
FIG. 2 is an explanatory diagram showing the monitoring system according to the present embodiment in a functional manner.
FIG. 3 is a flowchart related to a maintenance work setting method according to the present embodiment.

### Description of Embodiments

Embodiments according to the present disclosure will be described in detail below with reference to the drawings. Note that this disclosure is not limited to the embodiment. Further, components of the following embodiments include components that can be easily substituted by those skilled in the art or components that are substantially the same as the components of the following embodiments. Further, the components described below can be combined as appropriate, and in a case where there are a plurality of embodiments, the embodiments can also be combined.

### [Present Embodiment]

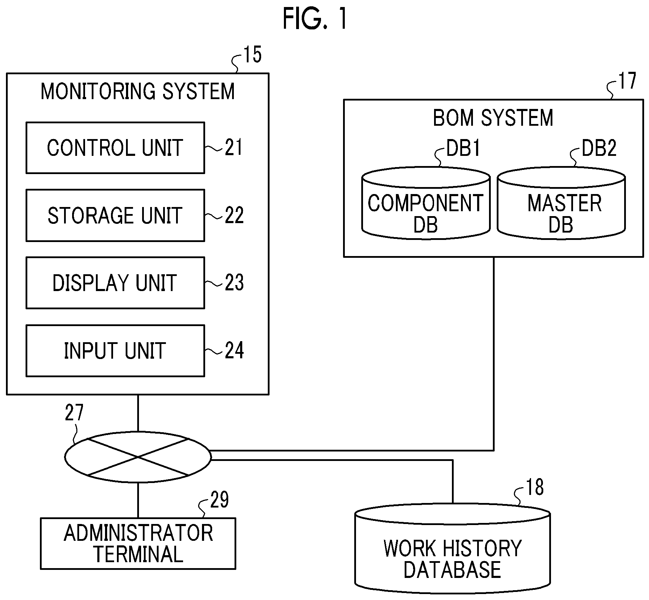

A monitoring system (aircraft monitoring system) 15 according to the present embodiment is a system that monitors a state of an aircraft. In addition, the monitoring system 15 sets maintenance work required for the aircraft based on monitoring information obtained as a monitoring result. The aircraft to be monitored by the monitoring system 15 may be a manned aircraft or an unmanned aircraft, and is not particularly limited. The monitoring system 15 will be described with reference to FIG. 1.

### (Monitoring System)

FIG. 1 is a diagram of the monitoring system according to the present embodiment. As shown in FIG. 1, the monitoring system 15 is connected to a bill of materials (BOM) system 17 and a work history database 18 via a communication network 27, and performs information communication with each of them.

The monitoring system 15 includes a control unit 21, a storage unit 22, a display unit 23, and an input unit 24. In addition, an administrator terminal 29 is connected to the monitoring system 15 via the communication network 27. Although not shown, the administrator terminal 29 has a display unit and an input unit, and can display monitoring information or set maintenance work, similarly to the monitoring system 15.

The control unit 21 includes, for example, an integrated circuit such as a central processing unit (CPU). The control unit 21 executes data processing for monitoring the aircraft or data processing for setting maintenance work based on the monitoring information. The storage unit 22 is any storage device such as a semiconductor storage device or a magnetic storage device. The storage unit 22 stores information acquired from various systems, information generated by various types of processing, and the like. The display unit 23 is, for example, a display device such as a liquid crystal display. The input unit 24 is, for example, an input device such as a keyboard and a mouse.

When the monitoring system 15 acquires the monitoring information, the monitoring system 15 determines whether abnormality/sign has occurred based on the monitoring information and component information acquired from the BOM system 17 described later, and sets an item of the maintenance work based on a determination result. In addition, the monitoring system 15 determines whether a periodic inspection is performed based on the component information acquired from the BOM system 17 described later, and sets the item of the maintenance work based on a determination result.

The BOM system 17 accumulates information for managing components of the aircraft used for maintenance work. The BOM system 17 includes a component database DB 1 that stores component information which is information on a component, and a master database DB2 that stores a work master which is information on maintenance work associated with the component. The component information includes the aircraft as an asset, a type of the component, a usage location of the component, the number of uses of the component, and an operating time of the component, and is information in which these pieces of information are associated with each other. In addition, the work master includes an asset type associated with the asset of the component information, the type of the component, a range of a usage history and a maintenance history of the component, a periodic work master, and an abnormality/sign response work master, and is information in which these pieces of information are associated with each other. In the periodic work master, conditions (periodic work occurrence condition) including temporal requirements for the maintenance work performed periodically and items of maintenance work associated with the conditions are associated with each other. In addition, in the abnormality/sign response work master, conditions (abnormality/sign conditions) of the maintenance work performed when the abnormality/sign has occurred and items of maintenance work associated with the condition are associated with each other. The "abnormality/sign" means at least one of an abnormality or a sign of the abnormality.

The work history database 18 accumulates work history data of the maintenance work. The work history database 18 records information acquired during the maintenance work as the work history data, and records, for example, information on a maintenance location input by a worker, image information acquired by an imaging device, and the like.

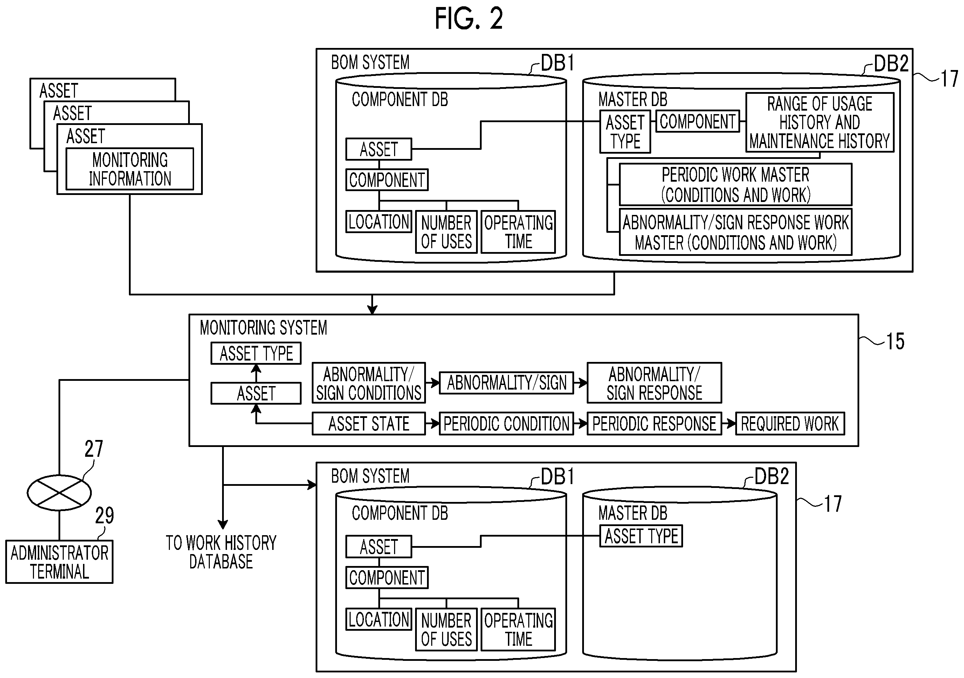

Next, an outline of functions of the monitoring system 15 will be described with reference to FIG. 2. FIG. 2 is an explanatory diagram showing the monitoring system according to the present embodiment in a functional manner. In FIG. 2, the aircraft is treated as an asset. As shown in FIG. 2, the monitoring system 15 acquires the monitoring information from the asset. The monitoring system 15 reflects a state of a component of the asset acquired based on the monitoring information in the BOM system 17. The monitoring system 15 determines a state of the asset based on the acquired monitoring information of the asset. The monitoring system 15 specifies an asset type corresponding to the asset of the component database DB1 of the BOM system 17 and the asset of the master database DB2. The monitoring system 15 extracts, based on the specified asset type, a periodic work occurrence condition and an abnormality/sign condition of the asset type from the periodic work master and the abnormality/sign response work master. In addition, the monitoring system 15 extracts, based on a usage history and a maintenance history of the component of the asset, the periodic work occurrence condition and the abnormality/sign condition of the component from the periodic work master and the abnormality/sign response work master. The monitoring system 15 sets an item of the maintenance work required based on the asset type and the periodic work occurrence condition of the component, and sets an item of the maintenance work required based on the asset type and the abnormality/sign condition of the component.

### (Maintenance Work Setting Method)

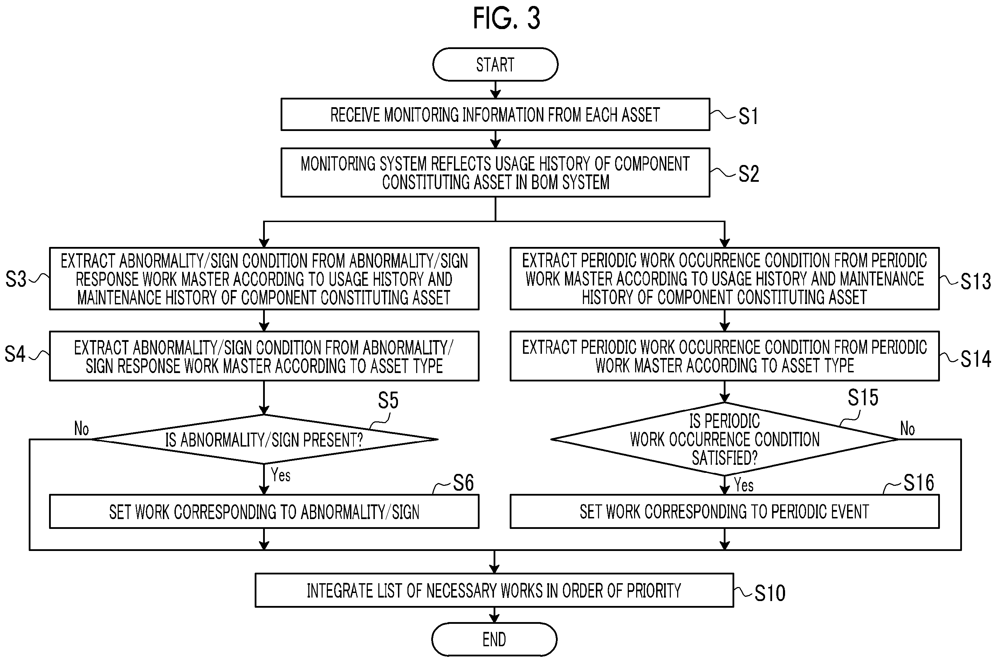

Next, a maintenance work setting method according to the present embodiment will be described with reference to FIG. 3. FIG. 3 is a flowchart related to a maintenance work setting method according to the present embodiment. In FIG. 3 as well, the aircraft is treated as an asset. The control unit 21 of the monitoring system 15 acquires the monitoring information from each asset (step S1). The control unit 21 reflects the usage history of the component constituting the asset in the BOM system 17 based on the acquired monitoring information (step S2). In step S2, the control unit 21 calculates the number of uses and the operating time of each component of the asset from the monitoring information, and adds the calculated number of uses and the calculated operating time to the number of uses and the operating time of the component of the BOM system 17 to update the component information of the BOM system 17.

Thereafter, the control unit 21 executes each of the setting of the maintenance work based on abnormality/sign and the setting of the maintenance work as a periodic event. As the setting of the maintenance work based on the abnormality/sign, the control unit 21 acquires the component information from the component database DB1 and the master database DB2 of the BOM system 17 after the execution of step S2, and extracts the abnormality/sign condition from the abnormality/sign response work master according to the usage history and the maintenance history of the component (step S3). In addition, the control unit 21 extracts the abnormality/sign condition from the abnormality/sign response work master according to the asset type corresponding to the monitoring information (step S4). The control unit 21 determines whether the abnormality/sign has occurred based on the abnormality/sign condition extracted in step S3 and step S4 (step S5). In step S5, in a case where it is determined that the abnormality/sign has occurred (step S5: Yes), the control unit 21 acquires and sets the maintenance work corresponding to the abnormality/sign from the abnormality/sign response work master (step S6), and proceeds to step S10 described later. On the other hand, in step S5, in a case where it is determined that the abnormality/sign is not present (step S5: No), the control unit 21 proceeds to step S10 described later without executing step S6.

On the other hand, as the setting of the maintenance work as the periodic event, the control unit 21 acquires the component information from the component database DB1 and the master database DB2 of the BOM system 17 after the execution of step S2, and extracts the periodic work occurrence condition from the periodic work master according to the usage history and the maintenance history of the component (step S13). In addition, the control unit 21 extracts the periodic work occurrence condition from the periodic work master according to the asset type corresponding to the monitoring information (step S14). The control unit 21 determines whether periodic work occurs based on the periodic work occurrence condition extracted in step S13 and step S14 (step S15). In step S15, in a case where it is determined that the periodic work occurs (step S15: Yes), the control unit 21 acquires and sets the maintenance work corresponding to the periodic event from the periodic work master (step S16), and proceeds to step S10 described later. On the other hand, in step S15, in a case where it is determined that the periodic work does not occur (step S15: No), the control unit 21 proceeds to step S10 described later without executing step S16.

After the execution of step S6 and step S16, the control unit 21 integrates the list of necessary maintenance works in order of priority for the set maintenance work to create the list (step S10), and ends the processing related to the setting of the maintenance work.

In step S10, in a case where the component is a component that requires maintenance work in the initial stage after start of use, and in a case where it is determined that the temporal requirement is the initial stage after start of use, the control unit 21 sets the priority of the maintenance work associated with the component to be higher. In addition, in step S10, in a case where the component is a consumable component, and in a case where the temporal requirement is determined to be a stable operation period, the control unit 21 sets the priority of the maintenance work associated with the component to be high before the component is consumed to an allowable extent.

In addition, in step S10, the control unit 21 may set the priority of the maintenance work set in both step S6 and step S16 to be higher, for example. In addition, in step S10, for example, the priority of the maintenance work based on the abnormality/sign condition extracted in both step S3 and step S4 may be set to be higher. Further, in step S10, for example, the priority of the maintenance work based on the periodic work occurrence condition extracted in both step S13 and step S14 may be set to be higher.

In the present embodiment, the control unit 21 sets the maintenance work based on the monitoring information and the component information, but may further set the maintenance work to omit unnecessary work processes in the work process of the maintenance work based on the monitoring information and the component information.

As described above, the aircraft monitoring system (monitoring system 15) and the maintenance work setting method according to the present embodiment are understood as follows, for example.

An aircraft monitoring system according to a first aspect includes a control unit 21 that monitors a state of an aircraft and sets maintenance work required for the aircraft, in which the control unit 21 executes step S1 of acquiring monitoring information obtained by monitoring the state of the aircraft, and steps S3 and S13 of acquiring component information that is information on a state of a component used in the aircraft, and extracting and setting an item of the maintenance work required for the aircraft based on the monitoring information and the component information.

With this configuration, since the item of the maintenance work based on the monitoring information and the component information can be set, the maintenance work with high accuracy can be set by taking into account the state of the component. Accordingly, it is possible to omit the setting of unnecessary maintenance work and unnecessary work processes, and it is possible to set appropriate and efficient maintenance work.

As a second aspect, in the aircraft monitoring system according to the first aspect, in step S3 of extracting and setting the item of the maintenance work, the control unit 21 extracts, based on the component information, the maintenance work to be performed for abnormality/sign associated with the component, determines whether the abnormality/sign has occurred based on the monitoring information, and sets the maintenance work associated with the abnormality/sign in a case where it is determined that the abnormality/sign has occurred.

With this configuration, it is possible to set appropriate maintenance work corresponding to the abnormality/sign according to the state of the component.

As a third aspect, in the aircraft monitoring system according to the first or second aspect, in step S13 of extracting and setting the item of the maintenance work, the control unit extracts, based on the component information, the maintenance work that is periodically performed and is associated with the component, determines whether a temporal requirement of the maintenance work that is periodically performed is satisfied, and sets the maintenance work that is periodically performed in a case where it is determined that the temporal requirement is satisfied.

With this configuration, it is possible to set appropriate maintenance work that is periodically performed according to the state of the component.

As a fourth aspect, in the aircraft monitoring system according to the third aspect, in a case where the component is a component that requires the maintenance work in an initial stage after start of use, and in a case where it is determined that the temporal requirement is the initial stage after start of use, the control unit 21 sets a priority of the maintenance work associated with the component to be higher.

With this configuration, it is possible to set appropriate maintenance work according to the initial stage after start of use of the component.

As a fifth aspect, in the aircraft monitoring system according to the third aspect, in a case where the component is a consumable component, and in a case where the temporal requirement is determined to be a stable operation period, the control unit 21 sets a priority of the maintenance work associated with the component to be higher before consumption of the consumable component reaches an allowable extent.

With this configuration, it is possible to set appropriate maintenance work according to the stable operation period of the component.

A sixth aspect relates to a maintenance work setting method executed by an aircraft monitoring system (monitoring system 15) that monitors a state of an aircraft and sets maintenance work required for the aircraft, the method including: by the aircraft monitoring system, a step S1 of acquiring monitoring information obtained by monitoring the state of the aircraft; and steps S3 and S13 of acquiring component information that is information on a state of a component used in the aircraft, and extracting and setting an item of the maintenance work required for the aircraft based on the monitoring information and the component information.

With this configuration, since the item of the maintenance work based on the monitoring information and the component information can be set, the maintenance work with high accuracy can be set by taking into account the state of the component. Accordingly, it is possible to omit the setting of unnecessary maintenance work and unnecessary work processes, and it is possible to set appropriate and efficient maintenance work.

### Reference Signs List

15: monitoring system
21: control unit
22: storage unit
23: display unit
24: input unit
DB1: component database
DB2: master database

## Claims

1. An aircraft monitoring system comprising:
a control unit that monitors a state of an aircraft and sets maintenance work required for the aircraft,
wherein the control unit executes
a step of acquiring monitoring information obtained by monitoring the state of the aircraft, and
a step of acquiring component information that is information on a state of a component used in the aircraft, and extracting and setting an item of the maintenance work required for the aircraft, based on the monitoring information and the component information.

2. The aircraft monitoring system according to Claim 1, wherein, in the step of extracting and setting the item of the maintenance work, the control unit
extracts, based on the component information, the maintenance work to be performed for abnormality/sign associated with the component,
determines whether the abnormality/sign has occurred based on the monitoring information, and
sets the maintenance work associated with the abnormality/sign in a case where it is determined that the abnormality/sign has occurred.

3. The aircraft monitoring system according to Claim 1, wherein, in the step of extracting and setting the item of the maintenance work, the control unit
extracts, based on the component information, the maintenance work that is periodically performed and is associated with the component,
determines whether a temporal requirement of the maintenance work that is periodically performed is satisfied, and
sets the maintenance work that is periodically performed in a case where it is determined that the temporal requirement is satisfied.

4. The aircraft monitoring system according to Claim 3,
wherein in a case where the component is a component that requires the maintenance work in an initial stage after start of use, and in a case where it is determined that the temporal requirement is the initial stage after start of use, the control unit sets a priority of the maintenance work associated with the component to be higher.

5. The aircraft monitoring system according to Claim 3, wherein
in a case where the component is a consumable component, and in a case where the temporal requirement is determined to be a stable operation period, the control unit sets a priority of the maintenance work associated with the component to be higher before consumption of the consumable component reaches an allowable extent.

6. A maintenance work setting method executed by an aircraft monitoring system that monitors a state of an aircraft and sets maintenance work required for the aircraft, the method comprising:
by the aircraft monitoring system,
a step of acquiring monitoring information obtained by monitoring the state of the aircraft; and
a step of acquiring component information that is information on a state of a component used in the aircraft, and extracting and setting an item of the maintenance work required for the aircraft based on the monitoring information and the component information.
